# EUROPEAN PATENT SPECIFICATION

(11) **EP 4 648 501 B1**
(45) Date of publication and mention of the grant of the patent: **13.05.2026**
(21) Application number: 24174587.6
(22) Date of filing: 07.05.2024
(51) Int. Cl.: H04B 7/185, H04W 64/00

(54) **METHOD FOR USING A USER EQUIPMENT WITH A MOBILE COMMUNICATION NETWORK, USER EQUIPMENT, SYSTEM OR MOBILE COMMUNICATION NETWORK, PROGRAM AND COMPUTER-READABLE MEDIUM**
VERFAHREN ZUR VERWENDUNG EINES BENUTZERGERÄTS MIT EINEM MOBILKOMMUNIKATIONSNETZWERK, BENUTZERGERÄT, SYSTEM ODER MOBILKOMMUNIKATIONSNETZWERK, PROGRAMM UND COMPUTERLESBARES MEDIUM
PROCÉDÉ D'UTILISATION D'UN ÉQUIPEMENT UTILISATEUR AVEC UN RÉSEAU DE COMMUNICATION MOBILE, ÉQUIPEMENT UTILISATEUR, SYSTÈME OU RÉSEAU DE COMMUNICATION MOBILE, PROGRAMME ET SUPPORT LISIBLE PAR ORDINATEUR

(43) Date of publication of application: 12.11.2025
(73) Proprietor: Deutsche Telekom AG, 53113 Bonn (DE)
(72) Inventor: LAUSTER, Reinhard, 3100 St. Pölten (AT)
(74) Representative: Schwöbel, Thilo K.

(56) References cited:
- WO-A1-2022/129690
- WO-A1-2024/032911

## Description

### BACKGROUND

The present invention relates a method for using a user equipment with a mobile communication network in view of an increased validity and/or verifiability of positional information related to the user equipment, the mobile communication network comprising a core network and a radio access network, wherein the radio access network is or at least comprises a part corresponding to a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality providing radio coverage to a radio cell.

Furthermore, the present invention relates to a user equipment for being used with a mobile communication network in view of an increased validity and/or verifiability of positional information related to the user equipment, wherein the user equipment is served via an antenna entity or functionality providing radio coverage to the user equipment and comprising or being related to a base station entity being part of a non-terrestrial network or a non-terrestrial network part of the mobile communication network.

Additionally, the present invention relates to a system or to a mobile communication network for using a user equipment with the mobile communication network in view of an increased validity and/or verifiability of positional information related to the user equipment, the mobile communication network comprising a core network and a radio access network, wherein the radio access network is or at least comprises a part corresponding to a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality providing radio coverage to a radio cell.

Furthermore, the present invention relates to a program and to a computer-readable medium for using a user equipment with a mobile communication network, according to the inventive method, in view of an increased validity and/or verifiability of positional information related to the user equipment, the mobile communication network comprising a core network and a radio access network, wherein the radio access network is or at least comprises a part corresponding to or being a non-terrestrial network.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies). Such mobile communication networks might be purely or predominantly based on terrestrial infrastructure of the radio access network. Modern mobile communication networks, such as 5G systems - especially using 5G NR (new radio) radio (access) technology - are evolving using air-based and/or space-based infrastructure, hence relying, at least partly, on non-terrestrial infrastructure, especially in the form of satellites and/or high altitude platform stations, HAPS, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude platform stations (HAPS). Such non-terrestrial networks are able to provide global cellular connectivity to handheld devices or user equipments, typically using satellite or HAPS coverage.
Satellite communication and non-terrestrial networks is/are known to provide, e.g., direct-communication between satellites and smartphones, as well as internet-of-things (IoT) type communications including NB-loT. This will address the challenges of reachability and service continuity in unserved/underserved areas, enhance reliability through connectivity between various access technologies, and improve network resilience.

However, satellites (or high-altitude platforms) typically have comparatively large coverage areas (or radio cells; created by non-terrestrial network satellite radio beams) - at least compared to typical terrestrial radio cells. Hence, a 3GPP terrestrial system (also, or complementarily, relying on non-terrestrial network infrastructure) is confronted with new challenges, business cases, access control, charging and national regulatory requirements (e.g. regarding lawful interception (LI), or emergency services). Regarding such services, reliable information regarding the location (or position) of the terminal and/or end-user is a key issue in order to enable these new business opportunities, especially for non-terrestrial network access (especially satellite access); thus, simple terminal-provided (i.e. user equipment-provided) location information (i.e., typically, retrieved via using a global navigation satellite system, such as GPS) is not sufficient, even though satellite-based (i.e. global navigation satellite system-based) location retrieval systems typically deliver high location accuracy. Hence, in most cases, it is preferred to use location information that is provided, or generated, by the network in order to ensure trust and/or to enable verification of the user equipment/terminal-generated location information; however, such network-provided location information typically involve additional efforts.

Prior art WO2024032911 discloses a communication system for verifying and validating satellite-based positional information from a user equipment connected to a non-terrestrial base station.

### SUMMARY

An object of the present invention is to provide a technically simple, effective and cost-effective solution for an increased validity and/or verifiability of positional information related to user equipments that are, especially, served by non-terrestrial networks (or non-terrestrial network parts), and wherein the positional information, related to the user equipment, is generated using a global navigation satellite system. A further object of the present invention is to provide a corresponding user equipment, a corresponding system or mobile communication network, and a corresponding program and computer-readable medium.

The object of the present invention is achieved by a method for using a user equipment with a mobile communication network in view of an increased validity and/or verifiability of positional information related to the user equipment, the mobile communication network comprising a core network and a radio access network, wherein the radio access network is or at least comprises a part corresponding to a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality providing radio coverage to a radio cell,
wherein the positional information related to the user equipment is generated using a global navigation satellite system, wherein the user equipment comprises a global navigation satellite system receiver entity or functionality in order to be able to generate positional information related to the user equipment,
wherein, in order to increase the validity and/or verifiability of the positional information related to the user equipment, the method comprises the following steps:
   -- in a first step, the user equipment receives, from the base station entity or from the core network, a specific position request information,
   -- in a second step, the user equipment transmits - to the base station entity or to the core network and in response to the specific position request information - an enhanced set of positional information instead of solely its calculated positional information.

It is thereby advantageously possible according to the present invention that - upon a specific request (specific position request information) received from the network or telecommunications network - a considered user equipment is able to not only provide merely the result(s) of a calculation related to its location (or position) based on signals, especially radio signals, received typically from a plurality of satellites of a global navigation satellite system, but to also provide at least part of the underlying (context) information that led the user equipment to obtain the respective values as indicative of its location (or position).
Hence, according to the present invention, it is advantageously possible to provide a mechanism to validate the terminal-provided (i.e. user equipment-provided) satellite-based location information; it is thus, e.g., possible to identify miss-behaving terminals or user equipments.

According to the present invention, these additional pieces of information (or enhanced set of positional information) - provided (upon (specific) request), by the (considered) user equipment, to the network or telecommunications network - advantageously allow for the possibility to validate (or to verify) the location (or position) information that the (considered) user equipment is able to provide (as its location or position to the network) based on using, for location purposes, the respective global navigation satellite system. Thereby, it is advantageously possible, according to the present invention, that the network (or telecommunications network) is - at least potentially - able to detect location information, provided by the (considered) user equipment, that is erroneous (in the sense of indicating (or referring to) an alleged location or position that does not correspond (sufficiently accurately, i.e. within an acceptable or expectable margin of error) to the actual location of the (considered) user equipment, either due to an intentional or unintentional malfunction of the global navigation satellite system used and/or due an intentional or unintentional malfunction of the location detection process of the user equipment.

Hence according to the present invention, it is possible to increase the validity and/or verifiability of the positional information related to the (considered) user equipment. In order for this to achieve, the user equipment transmits to the network or telecommunications network - i.e. to the base station entity or to the core network (of the mobile communication network) - the enhanced set of positional information instead of solely its calculated positional information (obtained based on using a global navigation satellite system such as the GPS system).
According to the present invention, the enhanced set of positional information is transmitted, by the (considered) user equipment, in response to the specific position request information, and the enhanced set of positional information might, or might not, comprise the (calculated or otherwise determined) positional information that the (considered) user equipment might otherwise (i.e. in case that the user equipment would not have received the inventive specific position request information but only an ordinary (or normal) position request information) have transmitted to the base station entity or to the core network. Especially according to the present invention, the enhanced set of positional information comprises the complete set of raw data or raw information - but at least a part of the raw data or raw information - that the (considered) user equipment typically receives from at least one satellite, but preferably from a plurality of satellites (of the global navigation satellite system used to determine its location or its position), and based on which the (considered) user equipment is able to determine its location or its position.
Furthermore according to the present invention, the specific position request information is received, by the (considered) user equipment, from the base station entity or from the core network of the mobile communication network, and (receiving) the specific position request information triggers the (considered) user equipment to provide the enhanced set of positional information (i.e. transmit the enhanced set of positional information to the mobile communication network); in this sense, the specific position request information is distinguished from a normal, or standard, position request information. Especially, the specific position request information is or corresponds to a 3GPP signaling, e.g. non-access stratum (NAS) signaling.
The specific position request information might be received, by the (considered) user equipment, by any means, especially by means of specifically (or dedicatedly) receiving such specific position request information, or by means of a broadcast operation of the base station entity and/or (a network node of) the core network of the mobile communication network, or by receiving the specific position request information once, and the specific position request information indicating that the enhanced set of positional information is to transmitted repeatedly, e.g. during a specific period of time or the like.

Furthermore according to the present invention, the mobile communication network comprises a core network and a radio access network. The radio access network is or at least comprises a part corresponding to a non-terrestrial network, and the (considered) user equipment is served by a base station entity being part of that non-terrestrial network or that non-terrestrial network part.
According to the present invention, the base station entity is provided with at least one antenna entity or functionality (but preferably, the base station entity is provided with more than one antenna entities or functionalities), the at least one antenna entity or functionality (of the base station entity) is either a satellite-based antenna entity or functionality (i.e. located aboard a satellite), or an antenna entity or functionality based on a high-altitude platform device (i.e. located aboard such a high altitude platform device). The base station entity is able to serve (i.e. providing communication services to) the considered user equipment by means of or using the at least one antenna entity or functionality - typically using a service (radio) link towards and/or from the user equipment in order to realize downlink and/or uplink data transmissions.
According to the present invention, the whole (or mayor parts of the) functionality of the base station entity might be located aboard the satellite or aboard the high altitude platform device (hence, in this case, typically requiring some kind of backhaul connectivity to an earth or ground station and/or to another satellite or high altitude platform device). Alternatively, the mayor parts of the functionality of the base station entity might be located either at or in an earth or ground station, or at or in another satellite or high-altitude platform device (in this case, typically requiring some kind of feeder link or feeder connectivity to an earth or ground station and/or to another satellite or high-altitude platform device).
Furthermore according to the present invention, the user equipment is configured to be able to determine (or generate) positional information related to the user equipment (i.e. to its position or location); this positional information is typically generated using a global navigation satellite system. The user equipment, thus, comprises a global navigation satellite system receiver entity or functionality, i.e. the user equipment typically comprises a global navigation satellite system receiver or a global navigation satellite system module.

The present invention is focused on low earth orbit (LEO) satellites or high altitude platform entities which typically are located up to 160 km until 2000 km above ground, and are, typically, traveling at a velocity of up to, or around, 7 km/s. However, also medium earth orbit (MEO) satellites (typically having a height above ground of 2000 km until 36000 km) and/or geostationary earth orbit (GEO) satellites (typically having a height above ground above 36000 km) as well as high-altitude platforms or high-altitude platform stations (HAPS) are able to be used, according to the present invention, as non-terrestrial network components or infrastructure.

The user equipment is connected to (or is in) a mobile communication network that is a non-terrestrial network; alternatively, the mobile communication network at least comprises a part that corresponds to or is a non-terrestrial network. The (considered specific) user equipment is served by a base station entity as in a conventionally known mobile communication network; however, the serving base station entity is assumed as being part of the non-terrestrial network (or, at least, the non-terrestrial network part) of the mobile communication network.

According to the present invention, it is advantageously possible and preferred that the specific position request information indicates the enhanced set of positional information, wherein especially the specific position request information indicates different kinds of the enhanced set of positional information, wherein different kinds of the enhanced set of positional information especially relate or refer to:
-- different types or systems of global navigation satellite systems,
-- different content sizes.

It is thereby advantageously possible that the specific position request information indicates, to the user equipment, what the mobile communication network expects the enhanced set of positional information to be, especially regarding its contents. E.g. it is possible and preferred according to the present invention that the specific position request information indicates different sizes or volumes of raw data to be transmitted as part of the enhanced set of positional information. In this manner, the specific position request information might be able to indicate different kinds of the enhanced set of positional information. Alternatively or cumulatively, the different kinds of the enhanced set of positional information might refer to the (considered) user equipment using different types of data or different types or systems of global navigation satellite systems, e.g. GPS instead of GLONASS (or vice versa) or GPS instead of GALILEO (or vice versa) or BEIDOU or the like.

According to the present invention, it is advantageously furthermore possible and preferred that the enhanced set of positional information comprises at least one of the following items:
-- the calculated positional information, calculated by the user equipment,
-- the related satellite data, especially depending on the used type or system of global navigation satellite system,
-- information related to the number and/or the identifiers of satellites used, especially satellite parameters, orbital parameters, time measurements and/or time stamps,
-- data and measurements for specific satellites of a global navigation satellite systems, especially satellite identifiers and especially based on preceding positional information stored for the user equipment.

It is thereby advantageously possible according to the present invention to easily and efficiently implement the inventive method and use the inventive user equipment or mobile communication network.

According to the present invention, it is furthermore advantageously possible and preferred that the core network comprises a satellite position location verification system, wherein the enhanced set of positional information is transmitted to the satellite position location verification system, wherein especially the satellite position location verification system retrieves the enhanced set of positional information delivered by the user equipment, wherein especially the satellite position location verification system stores the enhanced set of positional information, received from the user equipment in a satellite position location verification system-specific data base.

It is thereby advantageously possible according to the present invention that the enhanced set of positional information - provided by a user equipment, but preferably provided by a plurality of user equipments - is/are able to be easily and efficiently used and the inventive method efficiently implemented.

Furthermore, it is advantageously possible and preferred according to the present invention that, in a third step, a network-based validation of positional information related to the user equipment is performed, especially by the satellite position location verification system of the core network.

It is thereby advantageously possible according to the present invention that the enhanced set of positional information - provided by a user equipment, but preferably provided by a plurality of user equipments - is/are able to be easily and efficiently used and the inventive method efficiently implemented.

Furthermore, it is advantageously possible and preferred according to the present invention that the radio cell is earth-fixed or quasi-earth-fixed or earth-moving and/or that the specific position request information is received, by the user equipment, via, or using, 3GPP signaling, especially non-access stratum (NAS) signaling, and/or using a user plane protocol,
wherein especially the enhanced set of positional information is transmitted, by the user equipment, via or using, 3GPP signaling, especially non-access stratum (NAS) signaling, and/or using a user plane protocol.

Furthermore, it is advantageously possible and preferred according to the present invention that the satellite position location verification system applies a stepwise approach to increase the validity and/or verifiability of the positional information related to the user equipment, wherein especially the satellite position location verification system performs
-- a basic check whether the calculation and positional information delivered by the user equipment is correct,
-- a check whether satellite data of 3GPP access system is correlated to the global navigation satellite system used, especially relating to satellite beam data,
-- a check whether available terrestrial network-based information should be correlated to validate the positional information obtained from using the global navigation satellite system,
-- a check, especially using global navigation satellite system simulation, whether the enhanced set of positional information is plausible, correct and/or possible,
-- a check based on data of the satellite position location verification system-specific data base and/or based on artificial intelligence/machine-learning and/or statistics verification, especially using data relating to a plurality of other user equipments.

It is thereby advantageously possible according to the present invention that the enhanced set of positional information - provided by a user equipment, but preferably provided by a plurality of user equipments - is/are able to be easily and efficiently used and the inventive method efficiently implemented.

Furthermore, the present invention relates to a user equipment for being used with a mobile communication network in view of an increased validity and/or verifiability of positional information related to the user equipment,
wherein the user equipment is served via an antenna entity or functionality providing radio coverage to the user equipment and comprising or being related to a base station entity being part of a non-terrestrial network or a non-terrestrial network part of the mobile communication network,
wherein the positional information related to the user equipment is generated using a global navigation satellite system, wherein the user equipment comprises a global navigation satellite system receiver entity or functionality in order to be able to generate positional information related to the user equipment,
wherein, in order to increase the validity and/or verifiability of the positional information related to the user equipment, the user equipment is configured such that:
   -- the user equipment receives, from the base station entity or from the core network, a specific position request information,
   -- the user equipment transmits - to the base station entity or to the core network and in response to the specific position request information - an enhanced set of positional information instead of solely its calculated positional information.

Furthermore, the present invention relates to a system or mobile communication network for using a user equipment with the mobile communication network in view of an increased validity and/or verifiability of positional information related to the user equipment, the mobile communication network comprising a core network and a radio access network, wherein the radio access network is or at least comprises a part corresponding to a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform, the antenna entity or functionality providing radio coverage to a radio cell,
wherein the positional information related to the user equipment is generated using a global navigation satellite system, wherein the user equipment comprises a global navigation satellite system receiver entity or functionality in order to be able to generate positional information related to the user equipment,
wherein, in order to increase the validity and/or verifiability of the positional information related to the user equipment, the system or mobile communication network is configured such that:
   -- the user equipment receives, from the base station entity or from the core network, a specific position request information,
   -- the user equipment transmits - to the base station entity or to the core network and in response to the specific position request information - an enhanced set of positional information instead of solely its calculated positional information.

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

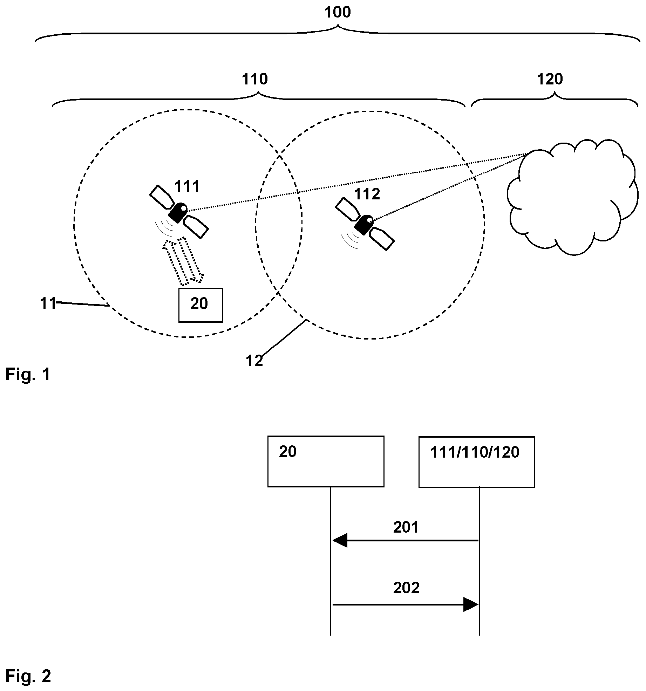

Figure 1 schematically illustrates the situation of a user equipment in a mobile communication network being a non-terrestrial network or at least comprising a part corresponding to a non-terrestrial network, the user equipment being served by a base station entity having at least an antenna entity or functionality being a satellite-based antenna entity or functionality.
Figure 2 schematically illustrates the user equipment receiving, from the base station entity or from the core network, a specific position request information, and the user equipment transmitting - to the base station entity or to the core network and in response to the specific position request information - an enhanced set of positional information.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112, both being schematically shown to be located aboard a satellite.

The mobile communication network 100 (or telecommunications network 100) is or at least comprises a part corresponding to or being a non-terrestrial network. The user equipment 20 is served by the (first) base station entity 111 being part of that non-terrestrial network or that non-terrestrial network part.
The base station entity 111 has or is provided with - in view of serving or providing radio coverage to the user equipment 20 - at least one antenna entity or functionality being either a satellite-based antenna entity or functionality, or an antenna entity or functionality based on a high-altitude platform; Figure 1 primarily shows the alternative of a satellite-based antenna entity or functionality (perceived, by the user equipment 20, as the base station entity 111). The base station entity 111, via or by means of the antenna entity or functionality, is able to provide radio coverage to a moving area (on the earth's surface), corresponding to an earth-moving radio cell 11. The second or further base station entity 112 is also schematically shown in Figure 1 as well as a further antenna entity or functionality providing or serving a further radio cell 12.

According to the present invention, the base station entity 111 is provided with at least one antenna entity or functionality (but the base station entity 111 might also be provided with more than one antenna entities or functionalities), the at least one antenna entity or functionality (of the base station entity 111) is either a satellite-based antenna entity or functionality (i.e. located aboard a satellite as shown in Figure 1), or an antenna entity or functionality based on a high-altitude platform device (i.e. located aboard such a high altitude platform device, not explicitly shown in Figure 1). The base station entity 111 is able to serve (i.e. providing communication services to) the considered user equipment 20 by means of or using the at least one antenna entity or functionality. In any case, typically, a service (radio) link towards and/or from the considered user equipment 20 is used in order to realize downlink and/or uplink data transmissions; this is schematically indicated, in Figure 1, by means of dotted arrows between the base station entity 111 and the considered user equipment 20. Figure 1 schematically and exemplarily shows a configuration where the mayor parts of the functionality of the base station entity 111 is located aboard the satellite (or the antenna entity or functionality); alternatively (but not shown in Figure 1), the mayor parts of the functionality of the base station entity 111 could also be located on the earth or at or in another satellite or high-altitude platform device. In such a scenario where the mayor parts of the functionality of the base station entity 111 is located separated from the antenna entity or functionality (and from the further antenna entity or functionality), the antenna entity or functionality (and the further antenna entity or functionality), typically requires some kind of feeder link or feeder connectivity (i.e. to the earth or ground station and/or to another satellite or high altitude platform device; not represented in Figure 1).
Alternatively (as shown in Figure 1), it is also possible and preferred according to the present invention that the whole (or mayor parts of the) functionality of the base station entity 111 is located aboard the satellite or aboard the high altitude platform device. In this case, a backhaul connectivity is typically provided, from the combined satellite-based base station entity 111 comprising the antenna entity or functionality, to an earth or ground station and/or to another satellite or high-altitude platform device (however, this is not represented in Figure 1 for the sake of simplicity).

In Figure 2, it is schematically illustrated how the user equipment 20 is receiving (in a first processing step 201), from the base station entity 111 (or from the radio access network 110) or from the core network120, a specific position request information, and the user equipment 20 is transmitting - to the base station entity 111 (or to the radio access network 110) or to the core network 120 and in a second processing step 202 (and in response to the specific position request information) - an enhanced set of positional information.
Thus, according to the present invention, it is advantageously possible to provide a solution to the problem that terminal-provided (i.e. user equipment-provided) location information (i.e. for example retrieved by means of the user equipment using a GPS system and solely providing the resulting (calculated) positional information) is not sufficient to fulfil business and/or regulatory issues depending on country and services based on geo-fenced areas. Also, business cases and related charging is - from an operator perspective - not possible based merely on untrusted terminal location information as the network (i.e. the mobile communication network) requires a certain level of trust for location information provided from terminals (i.e. the user equipment 20).
Satellite-based location systems - i.e. global navigation satellite system such as, e.g., GPS (Global Positioning System), GLONASS, GALILEO, etc. - are widely used and can provide the required location information with (high) precision or accuracy; according to the present invention, it is advantageously possible to eliminate a possible source of error as it is possible to avoid that the global navigation satellite system location information (e.g. GPS location information) is retrieved and processed solely on the terminal-level (i.e. by the user equipment 20) - as solely a terminal-based processing (and, as a consequence, deriving results in the form of positional information) cannot be considered as trustable by the network-side (i.e. by the mobile communication network 100).
Hence, according to the present invention, it is advantageously possible to provide a mechanism to validate the terminal provided satellite-based location information and, e.g., identify miss-behaving terminals (i.e. user equipments).

According to the present invention, the enhanced set of positional information especially comprises at least one of the following items:
-- the calculated positional information, calculated by the user equipment 20,
-- the related satellite data, especially depending on the used type or system of global navigation satellite system,
-- information related to the number and/or the identifiers of satellites used, especially satellite parameters, orbital parameters, time measurements and/or time stamps,
-- data and measurements for specific satellites of a global navigation satellite systems, especially satellite identifiers and especially based on preceding positional information stored for the user equipment 20.

The enhanced set of positional information, provided by the user equipment 20 (but, of course, typically by a plurality of user equipments - especially such as to be able, e.g., to differentiate erroneous behavior of the global navigation satellite system, e.g. in a certain region, from an erroneous functionality of a specific user equipment 20) is especially handled, according to the present invention, by a satellite position location verification system (especially as part of the core network 120 of the mobile communication network 100). The enhanced set of positional information of user equipment 20 (i.e. the plurality of enhanced sets of positional information of each user equipments in question) is/are transmitted to the satellite position location verification system, and the satellite position location verification system retrieves and/or stores the enhanced set of positional information delivered by the user equipment 20 or user equipments 20; the enhanced set(s) of positional information, received from the user equipment(s) 20, is/are especially stored in a satellite position location verification system-specific data base. Preferably, in a third step, a network-based validation of positional information to the user equipment 20 (or of pieces of positional information related to the user equipments in question) is performed, especially by the satellite position location verification system of the core network 120.

Especially, the satellite position location verification system applies a stepwise approach to increase the validity and/or verifiability of the positional information related to the user equipment 20 (or related to the plurality of user equipments), wherein especially the satellite position location verification system performs
-- a basic check whether the calculation and positional information delivered by the user equipment 20 is correct,
-- a check whether satellite data of 3GPP access system is correlated to the global navigation satellite system used, especially relating to satellite beam data,
-- a check whether available terrestrial network-based information should be correlated to validate the positional information obtained from using the global navigation satellite system,
-- a check, especially using global navigation satellite system simulation, whether the enhanced set of positional information is plausible, correct and/or possible,
-- a check based on data of the satellite position location verification system-specific data base and/or based on artificial intelligence/machine-learning and/or statistics verification, especially using data relating to a plurality of other user equipments.

Hence, according to the present invention, the user equipment 20 receives from the core network 120 on signaling (or optionally user data, or OTA communication, over the air communication) a request (i.e. the specific position request information) to deliver satellite-based location and the related satellite data (i.e. GPS system type, number and IDs of satellites, satellite parameters, orbital parameters, time measurements / timestamps - i.e. the enhanced set of positional information). Optionally, the core network 120 might request (by means of the specific position request information, i.e. by means of an indication as part thereof) to use a specific satellite-based location constellation/system (such as, e.g., GPS, GLONASS, GALILEO,..). Furthermore optionally, the core network 120 might request (again by means of the specific position request information, i.e. by means of an indication as part thereof) data and measurement(s) for specific satellites of such a constellation (e.g. a satellite with number/etc..) - based no "old" location information stored for this terminal or user equipment.
The satellite position location verification system is especially realized as a network-based function or a network-based service (e.g. as GPS satellite position location verification system, SPLV system), and retrieves the information delivered by the user equipment, i.e. the enhanced set of positional information (of the respective user equipments involved, i.e. having been triggered to provide such enhanced set of positional information by means of corresponding pieces of specific position request information). Data are especially stored on a satellite position location verification (SPLV) system-specific data base.

It is especially preferred, according to the present invention, that this functionality has a stepwise approach to verify the calculation of the positional information provided by the user equipments 20 (in the following example, the use of GPS as global navigation satellite system is assumed):
1. Check: Basic check if user equipment calculation and location delivery is correct;
2.Check: Satellite data of 3GPP access system is correlated to GPS (e.g.. satellite beam data);
3. Check: If available, terrestrial network-based information should be correlated to validate GPS location;
4. Check: The satellite position location verification system has a GPS simulation system by means of which it is possible to determine the probability of the user equipment received GPS data (i.e. visibility of satellites, obit data,...) being correct and possible;
5. Check: Based on database and artificial intelligence/machine-learning and/or statistics verification of all users (i.e. user equipments) for calculation of their location;
These checks allow a network-based validation of terminal provided location (e.g. GPS coordinates) but additional network-based calculations/interpolation of terminal position is possible.

Hence, according to the present invention, it is advantageously possible to provide for:
-- a detection of cheating terminals and add these terminals in a list/database;
-- create new additional a network-based location information for terminals and store it;
-- depending on database data for terminals (user equipments) and operator policy:
   -- set terminal in a forbidden state and block all satellite accesses;
   -- block terminals (user equipments) in specific satellite areas (e.g. 3GPP RAN TAls) only;
   -- interpolate;
-- a validation of trust and accuracy of terminal location and related policy to use satellite access;
-- an interpolation and location correction based on other user equipment's position and/or reference stations.

## Claims

1. Method for using a user equipment (20) with a mobile communication network (100) in view of an increased validity and/or verifiability of positional information related to the user equipment (20), the mobile communication network (100) comprising a core network (120) and a radio access network (110), wherein the radio access network (110) is or at least comprises a part corresponding to a non-terrestrial network, wherein the user equipment (20) is served by a base station entity being part of that non-terrestrial network or that non-terrestrial network part, wherein the base station entity has or is provided with - in view of serving or providing radio coverage to the user equipment (20) - at least an antenna entity or functionality (111) being either a satellite-based antenna entity or functionality, or an antenna entity or functionality based on a high-altitude platform, the antenna entity or functionality (111) providing radio coverage to a radio cell (11), wherein the positional information related to the user equipment (20) is generated using a global navigation satellite system, wherein the user equipment (20) comprises a global navigation satellite system receiver entity or functionality in order to be able to generate positional information related to the user equipment (20),
wherein, in order to increase the validity and/or verifiability of the positional information related to the user equipment (20), the method comprises the following steps:
-- in a first step, the user equipment (20) receives, from the base station entity (111) or from the core network (120), a specific position request information, triggering the user equipment (20) to provide an enhanced set of positional information,
-- in a second step, the user equipment (20) transmits - to the base station entity (111) or to the core network (120) and in response to the specific position request information - an enhanced set of positional information comprising its calculated positional information and comprising raw data received from a plurality of satellites of the global navigation satellite system,
-- in a third step, a network-based validation of positional information related to the user equipment (20) is performed, wherein a satellite position location verification system applies a stepwise approach comprising a basic check whether the calculation is correct, a check whether satellite data of 3GPP access system is correlated to the global navigation satellite system used, a check whether available terrestrial network-based information should be correlated to validate the positional information obtained from using the global navigation satellite system, a check using global navigation satellite system simulation whether the enhanced set of positional information is plausible, and a check based on artificial intelligence or statistics verification

2. Method according to claim 1, wherein the specific position request information indicates the enhanced set of positional information, wherein especially the specific position request information indicates different kinds of the enhanced set of positional information, wherein different kinds of the enhanced set of positional information especially relate or refer to:
-- different types or systems of global navigation satellite systems,
-- different content sizes.

3. Method according to one of the preceding claims, wherein the enhanced set of positional information comprises at least one of the following items:
-- the calculated positional information, calculated by the user equipment (20),
-- the related satellite data, especially depending on the used type or system of global navigation satellite system,
-- information related to the number and/or the identifiers of satellites used, especially satellite parameters, orbital parameters, time measurements and/or time stamps,
-- data and measurements for specific satellites of a global navigation satellite systems, especially satellite identifiers and especially based on preceding positional information stored for the user equipment (20).

4. Method according to one of the preceding claims, wherein the core network (120) comprises a satellite position location verification system, wherein the enhanced set of positional information is transmitted to the satellite position location verification system, wherein especially the satellite position location verification system retrieves the enhanced set of positional information delivered by the user equipment (20), wherein especially the satellite position location verification system stores the enhanced set of positional information, received from the user equipment (20) in a satellite position location verification system-specific data base.

5. Method according to one of the preceding claims, wherein, in a third step, a network-based validation of positional information related to the user equipment (20) is performed, especially by the satellite position location verification system of the core network (120).

6. Method according to one of the preceding claims, wherein the specific position request information is received, by the user equipment (20), via, or using, 3GPP signaling, especially non-access stratum (NAS) signaling, and/or using a user plane protocol,
wherein especially the enhanced set of positional information is transmitted, by the user equipment (20), via or using, 3GPP signaling, especially non-access stratum (NAS) signaling, and/or using a user plane protocol.

7. User equipment (20) for being used with a mobile communication network (100) in view of an increased validity and/or verifiability of positional information related to the user equipment (20),
wherein the user equipment (20) is served via an antenna entity or functionality (111) providing radio coverage to the user equipment (20) and comprising or being related to a base station entity being part of a non-terrestrial network or a non-terrestrial network part of the mobile communication network (100),
wherein the positional information related to the user equipment (20) is generated using a global navigation satellite system, wherein the user equipment (20) comprises a global navigation satellite system receiver entity or functionality in order to be able to generate positional information related to the user equipment (20),
wherein, in order to increase the validity and/or verifiability of the positional information related to the user equipment (20), the user equipment (20) is configured such that:
-- the user equipment (20) receives, from the base station entity (111) or from the core network (120), a specific position request information, triggering the user equipment (20) to provide an enhanced set of positional information,
-- the user equipment (20) transmits - to the base station entity (111) or to the core network (120) and in response to the specific position request information - an enhanced set of positional information comprising its calculated positional information and comprising raw data received from a plurality of satellites of the global navigation satellite system,
-- a network-based validation of positional information related to the user equipment (20) is performed, wherein a satellite position location verification system is configured to apply a stepwise approach comprising a basic check whether the calculation is correct, a check whether satellite data of 3GPP access system is correlated to the global navigation satellite system used, a check whether available terrestrial network-based information should be correlated to validate the positional information obtained from using the global navigation satellite system, a check using global navigation satellite system simulation whether the enhanced set of positional information is plausible, and a check based on artificial intelligence or statistics verification

8. Mobile communication network (100) comprising a user equipment (20) with the mobile communication network (100) in view of an increased validity and/or verifiability of positional information related to the user equipment (20), the mobile communication network (100) comprising a core network (120) and a radio access network (110), wherein the radio access network (110) is or at least comprises a part corresponding to a non-terrestrial network, wherein the user equipment (20) is served by a base station entity being part of that non-terrestrial network or that non-terrestrial network part, wherein the base station entity has or is provided with - in view of serving or providing radio coverage to the user equipment (20) - at least an antenna entity or functionality (111) being either a satellite-based antenna entity or functionality, or an antenna entity or functionality based on a high-altitude platform, the antenna entity or functionality (111) providing radio coverage to a radio cell (11),
wherein the user equipment (20) is configured to generate the positional information using a global navigation satellite system, wherein the user equipment (20) is configured to comprise a global navigation satellite system receiver entity or functionality in order to be able to generate positional information related to the user equipment (20),
wherein, in order to increase the validity and/or verifiability of the positional information related to the user equipment (20), the system or mobile communication network (100) is configured such that:
-- the user equipment (20) is configured to receive, from the base station entity (111) or from the core network (120), a specific position request information, triggering the user equipment (20) to provide an enhanced set of positional information,
-- the user equipment (20) is configured to transmit - to the base station entity (111) or to the core network (120) and in response to the specific position request information - an enhanced set of positional information comprising its calculated positional information and comprising raw data received from a plurality of satellites of the global navigation satellite system
-- a network-based validation of positional information related to the user equipment (20) is performed, wherein a satellite position location verification system applies a stepwise approach comprising a basic check whether the calculation is correct, a check whether satellite data of 3GPP access system is correlated to the global navigation satellite system used, a check whether available terrestrial network-based information should be correlated to validate the positional information obtained from using the global navigation satellite system, a check using global navigation satellite system simulation whether the enhanced set of positional information is plausible, and a check based on artificial intelligence or statistics verification

9. Program comprising a computer readable program code, which, when executed in part on a user equipment (20) and in part on network node of a mobile communication network (100), causes the user equipment (20) and the network node of the mobile communication network (100) to perform a method according one of claims 1 to 6.

10. Computer-readable medium comprising instructions which when executed in part on a user equipment (20) and in part on network node of a mobile communication network (100), causes the user equipment (20)and the network node of the mobile communication network (100) to perform a method according one of claims 1 to 6

## Patentansprüche

1. Verfahren zur Verwendung eines Endgeräts (20) mit einem Mobilkommunikationsnetz (100) im Hinblick auf eine erhöhte Gültigkeit und/oder Nachprüfbarkeit von Positionsinformation, die sich auf das Endgerät (20) bezieht, wobei das Mobilkommunikationsnetz (100) ein Kernnetz (120) und ein Funkzugangsnetz (110) umfasst, wobei das Funkzugangsnetz (110) einem nicht-terrestrischen Netz entspricht oder zumindest einen Teil davon umfasst, wobei das Endgerät (20) von einer Basisstationseinheit versorgt wird, die Teil dieses nicht-terrestrischen Netzes oder dieses nicht-terrestrischen Netzteils ist, wobei die Basisstationseinheit - im Hinblick auf die Versorgung des Endgeräts (20) mit Funkabdeckung - über mindestens eine Antenneneinheit/-funktionalität (111) verfügt oder damit ausgestattet ist, die entweder eine satellitengestützte Antenneneinheit/-funktionalität oder eine Antenneneinheit/-funktionalität, die auf einer Höhenplattform basiert, darstellt, wobei die Antenneneinheit/-funktionalität (111) eine Funkzelle (11) mit Funkabdeckung versorgt,
wobei die Positionsinformation, die sich auf das Endgerät (20) bezieht, mithilfe eines globalen Navigationssatellitensystems (GNSS) erzeugt wird, wobei das Endgerät (20) eine GNSS-Empfängereinheit/-funktionalität umfasst, um Positionsinformation, die sich auf das Endgerät (20) bezieht, erzeugen zu können,
wobei das Verfahren, um die Gültigkeit und/oder Nachprüfbarkeit der Positionsinformation, die sich auf das Endgerät (20) bezieht, zu erhöhen, die folgenden Schritte umfasst:
- in einem ersten Schritt empfängt das Endgerät (20) von der Basisstationseinheit (111) oder vom Kernnetz (120) eine spezifische Positionsanforderungsinformation, die das Endgerät (20) veranlasst, einen erweiterten Positionsinformationssatz bereitzustellen,
- in einem zweiten Schritt übermittelt das Endgerät (20) - an die Basisstationseinheit (111) oder an das Kernnetz (120) und als Reaktion auf die spezifische Positionsanforderungsinformation - einen erweiterten Positionsinformationssatz, der seine berechnete Positionsinformation sowie Rohdaten umfasst, die von mehreren Satelliten des globalen Navigationssatellitensystems empfangen wurden,
- in einem dritten Schritt wird eine netzwerkbasierte Validierung der Positionsinformation, die sich auf das Endgerät (20) bezieht, durchgeführt, wobei ein Satelliten-Positionsverifikationssystem einen schrittweisen Ansatz anwendet, der Folgendes umfasst: eine grundlegende Prüfung, ob die Berechnung korrekt ist; eine Prüfung, ob die Satellitendaten des 3GPP-Zugangssystems mit dem verwendeten globalen Navigationssatellitensystem korrelieren; eine Prüfung, ob verfügbare terrestrische netzwerkbasierte Information zur Validierung der mithilfe des globalen Navigationssatellitensystems erhaltenen Positionsinformation korreliert werden sollte;
eine Prüfung mithilfe einer GNSS-Simulation, ob der erweiterte Positionsinformationssatz plausibel ist; sowie eine Prüfung auf Basis von künstlicher Intelligenz oder statistischer Verifikation.

2. Verfahren nach Anspruch 1, wobei die spezifische Positionsanforderungsinformation den erweiterten Positionsinformationssatz anzeigt, wobei die spezifische Positionsanforderungsinformation insbesondere verschiedene Arten des erweiterten Positionsinformationssatzes anzeigt, wobei sich verschiedene Arten des erweiterten Positionsinformationssatzes insbesondere auf Folgendes beziehen:
- verschiedene Typen oder Systeme von globalen Navigationssatellitensystemen,
- verschiedene Inhaltsgrößen.

3. Verfahren nach einem der vorhergehenden Ansprüche, wobei der erweiterte Positionsinformationssatz mindestens eines der folgenden Elemente umfasst:
- die berechnete Positionsinformation, die vom Endgerät (20) berechnet wurde,
- die zugehörigen Satellitendaten, insbesondere in Abhängigkeit vom verwendeten Typ oder System des globalen Navigationssatellitensystems,
- Informationen zur Anzahl und/oder zu den Identifikatoren der verwendeten Satelliten, insbesondere Satellitenparameter, Orbitalparameter, Zeitmessungen und/oder Zeitstempel,
- Daten und Messungen für bestimmte Satelliten eines globalen Navigationssatellitensystems, insbesondere Satellitenidentifikatoren, und insbesondere auf Grundlage zuvor gespeicherter Positionsinformation für das Endgerät (20).

4. Verfahren nach einem der vorhergehenden Ansprüche, wobei das Kernnetz (120) ein Satelliten-Positionsverifikationssystem umfasst, wobei der erweiterte Positionsinformationssatz an das Satelliten-Positionsverifikationssystem übermittelt wird, wobei das Satelliten-Positionsverifikationssystem den vom Endgerät (20) gelieferten erweiterten Positionsinformationssatz insbesondere abruft, wobei das Satelliten-Positionsverifikationssystem den vom Endgerät (20) empfangenen erweiterten Positionsinformationssatz insbesondere in einer systemspezifischen Datenbank des Satelliten-Positionsverifikationssystems speichert.

5. Verfahren nach einem der vorhergehenden Ansprüche, wobei in einem dritten Schritt eine netzwerkbasierte Validierung der Positionsinformation, die sich auf das Endgerät (20) bezieht, durchgeführt wird, insbesondere durch das Satelliten-Positionsverifikationssystem des Kernnetzes (120).

6. Verfahren nach einem der vorhergehenden Ansprüche, wobei die spezifische Positionsanforderungsinformation vom Endgerät (20) über oder mithilfe von 3GPP-Signalisierung, insbesondere Non-Access-Stratum-Signalisierung (NAS), und/oder mithilfe eines Benutzerebenenprotokolls empfangen wird,
wobei insbesondere der erweiterte Positionsinformationssatz vom Endgerät (20) über oder mithilfe von 3GPP-Signalisierung, insbesondere Non-Access-Stratum-Signalisierung (NAS), und/oder mithilfe eines Benutzerebenenprotokolls übermittelt wird.

7. Endgerät (20) zur Verwendung mit einem Mobilkommunikationsnetz (100) im Hinblick auf eine erhöhte Gültigkeit und/oder Nachprüfbarkeit von Positionsinformation, die sich auf das Endgerät (20) bezieht,
wobei das Endgerät (20) über eine Antenneneinheit/-funktionalität (111) versorgt wird, die dem Endgerät (20) Funkabdeckung bereitstellt und eine Basisstationseinheit umfasst oder damit in Verbindung steht, die Teil eines nicht-terrestrischen Netzes oder eines nicht-terrestrischen Netzteils des Mobilkommunikationsnetzes (100) ist,
wobei die Positionsinformation, die sich auf das Endgerät (20) bezieht, mithilfe eines globalen Navigationssatellitensystems erzeugt wird, wobei das Endgerät (20) eine GNSS-Empfängereinheit/-funktionalität umfasst, um Positionsinformation, die sich auf das Endgerät (20) bezieht, erzeugen zu können,
wobei das Endgerät (20), um die Gültigkeit und/oder Nachprüfbarkeit der Positionsinformation, die sich auf das Endgerät (20) bezieht, zu erhöhen, derart konfiguriert ist, dass:
- das Endgerät (20) von der Basisstationseinheit (111) oder vom Kernnetz (120) eine spezifische Positionsanforderungsinformation empfängt, die das Endgerät (20) veranlasst, einen erweiterten Positionsinformationssatz bereitzustellen,
- das Endgerät (20) - an die Basisstationseinheit (111) oder an das Kernnetz (120) und als Reaktion auf die spezifische Positionsanforderungsinformation - einen erweiterten Positionsinformationssatz übermittelt, der seine berechnete Positionsinformation sowie Rohdaten umfasst, die von mehreren Satelliten des globalen Navigationssatellitensystems empfangen wurden,
- eine netzwerkbasierte Validierung der Positionsinformation, die sich auf das Endgerät (20) bezieht, durchgeführt wird, wobei ein Satelliten-Positionsverifikationssystem konfiguriert ist, einen schrittweisen Ansatz anzuwenden, der Folgendes umfasst: eine grundlegende Prüfung, ob die Berechnung korrekt ist; eine Prüfung, ob die Satellitendaten des 3GPP-Zugangssystems mit dem verwendeten globalen Navigationssatellitensystem korrelieren; eine Prüfung, ob verfügbare terrestrische netzwerkbasierte Information zur Validierung der mithilfe des globalen Navigationssatellitensystems erhaltenen Positionsinformation korreliert werden sollte;
eine Prüfung mithilfe einer GNSS-Simulation, ob der erweiterte Positionsinformationssatz plausibel ist; sowie eine Prüfung auf Basis von künstlicher Intelligenz oder statistischer Verifikation.

8. Mobilkommunikationsnetz (100), das ein Endgerät (20) umfasst, das mit dem Mobilkommunikationsnetz (100) im Hinblick auf eine erhöhte Gültigkeit und/oder Nachprüfbarkeit von Positionsinformation, die sich auf das Endgerät (20) bezieht, verwendet wird, wobei das Mobilkommunikationsnetz (100) ein Kernnetz (120) und ein Funkzugangsnetz (110) umfasst, wobei das Funkzugangsnetz (110) einem nicht-terrestrischen Netz entspricht oder zumindest einen Teil davon umfasst, wobei das Endgerät (20) von einer Basisstationseinheit versorgt wird, die Teil dieses nicht-terrestrischen Netzes oder dieses nicht-terrestrischen Netzteils ist, wobei die Basisstationseinheit - im Hinblick auf die Versorgung des Endgeräts (20) mit Funkabdeckung - über mindestens eine Antenneneinheit/-funktionalität (111) verfügt oder damit ausgestattet ist, die entweder eine satellitengestützte Antenneneinheit/-funktionalität oder eine Antenneneinheit/-funktionalität, die auf einer Höhenplattform basiert, darstellt, wobei die Antenneneinheit/-funktionalität (111) eine Funkzelle (11) mit Funkabdeckung versorgt,
wobei das Endgerät (20) konfiguriert ist, die Positionsinformation mithilfe eines globalen Navigationssatellitensystems zu erzeugen, wobei das Endgerät (20) konfiguriert ist, eine GNSS-Empfängereinheit/-funktionalität zu umfassen, um Positionsinformation, die sich auf das Endgerät (20) bezieht, erzeugen zu können,
wobei das System oder das Mobilkommunikationsnetz (100), um die Gültigkeit und/oder Nachprüfbarkeit der Positionsinformation, die sich auf das Endgerät (20) bezieht, zu erhöhen, derart konfiguriert ist, dass:
- das Endgerät (20) konfiguriert ist, von der Basisstationseinheit (111) oder vom Kernnetz (120) eine spezifische Positionsanforderungsinformation zu empfangen, die das Endgerät (20) veranlasst, einen erweiterten Positionsinformationssatz bereitzustellen,
- das Endgerät (20) konfiguriert ist, - an die Basisstationseinheit (111) oder an das Kernnetz (120) und als Reaktion auf die spezifische Positionsanforderungsinformation - einen erweiterten Positionsinformationssatz zu übermitteln, der seine berechnete Positionsinformation sowie Rohdaten umfasst, die von mehreren Satelliten des globalen Navigationssatellitensystems empfangen wurden,
- eine netzwerkbasierte Validierung der Positionsinformation, die sich auf das Endgerät (20) bezieht, durchgeführt wird, wobei ein Satelliten-Positionsverifikationssystem einen schrittweisen Ansatz anwendet, der Folgendes umfasst: eine grundlegende Prüfung, ob die Berechnung korrekt ist; eine Prüfung, ob die Satellitendaten des 3GPP-Zugangssystems mit dem verwendeten globalen Navigationssatellitensystem korrelieren; eine Prüfung, ob verfügbare terrestrische netzwerkbasierte Information zur Validierung der mithilfe des globalen Navigationssatellitensystems erhaltenen Positionsinformation korreliert werden sollte; eine Prüfung mithilfe einer GNSS-Simulation, ob der erweiterte Positionsinformationssatz plausibel ist; sowie eine Prüfung auf Basis von künstlicher Intelligenz oder statistischer Verifikation.

9. Programm, das einen computerlesbaren Programmcode umfasst, der, wenn er teilweise auf einem Endgerät (20) und teilweise auf einem Netzknoten eines Mobilkommunikationsnetzes (100) ausgeführt wird, das Endgerät (20) und den Netzknoten des Mobilkommunikationsnetzes (100) veranlasst, ein Verfahren nach einem der Ansprüche 1 bis 6 durchzuführen.

10. Computerlesbares Medium, das Anweisungen umfasst, die, wenn sie teilweise auf einem Endgerät (20) und teilweise auf einem Netzknoten eines Mobilkommunikationsnetzes (100) ausgeführt werden, das Endgerät (20) und den Netzknoten des Mobilkommunikationsnetzes (100) veranlassen, ein Verfahren nach einem der Ansprüche 1 bis 6 durchzuführen.

## Revendications

1. Procédé d'utilisation d'un équipement utilisateur (20) avec un réseau de communication mobile (100) en vue d'une validité et/ou d'une vérifiabilité accrue d'informations de positionnement relatives à l'équipement utilisateur (20), le réseau de communication mobile (100) comprenant un réseau central (120) et un réseau d'accès radio (110), le réseau d'accès radio (110) correspondant à un réseau non terrestre ou comprenant au moins une partie correspondant à un réseau non terrestre, l'équipement utilisateur (20) étant desservi par une entité de station de base faisant partie de ce réseau non terrestre ou de cette partie de réseau non terrestre, l'entité de station de base disposant - en vue de desservir l'équipement utilisateur (20) ou de lui fournir une couverture radio - d'au moins une entité/fonctionnalité d'antenne (111) étant soit une entité/fonctionnalité d'antenne satellitaire, soit une entité/fonctionnalité d'antenne basée sur une plateforme à haute altitude, l'entité/fonctionnalité d'antenne (111) fournissant une couverture radio à une cellule radio (11),
les informations de positionnement relatives à l'équipement utilisateur (20) étant générées à l'aide d'un système mondial de navigation par satellite (GNSS), l'équipement utilisateur (20) comprenant une entité/fonctionnalité de récepteur GNSS afin de pouvoir générer des informations de positionnement relatives à l'équipement utilisateur (20), le procédé comprenant, afin d'accroître la validité et/ou la vérifiabilité des informations de positionnement relatives à l'équipement utilisateur (20), les étapes suivantes :
- dans une première étape, l'équipement utilisateur (20) reçoit, de l'entité de station de base (111) ou du réseau central (120), une information de demande de position spécifique déclenchant l'équipement utilisateur (20) afin qu'il fournisse un ensemble étendu d'informations de positionnement,
- dans une deuxième étape, l'équipement utilisateur (20) transmet - à l'entité de station de base (111) ou au réseau central (120) et en réponse à l'information de demande de position spécifique - un ensemble étendu d'informations de positionnement comprenant ses informations de positionnement calculées ainsi que des données brutes reçues de plusieurs satellites du système mondial de navigation par satellite,
- dans une troisième étape, une validation basée sur le réseau des informations de positionnement relatives à l'équipement utilisateur (20) est effectuée, un système de vérification de la localisation par satellite appliquant une approche par étapes comprenant une vérification de base de l'exactitude du calcul, une vérification de la corrélation des données satellite du système d'accès 3GPP avec le système mondial de navigation par satellite utilisé, une vérification permettant de déterminer si les informations basées sur le réseau terrestre disponibles doivent être corrélées pour valider les informations de positionnement obtenues à l'aide du système mondial de navigation par satellite, une vérification à l'aide de la simulation GNSS portant sur la plausibilité de l'ensemble étendu d'informations de positionnement, ainsi qu'une vérification fondée sur l'intelligence artificielle ou la vérification statistique.

2. Procédé selon la revendication 1, l'information de demande de position spécifique indiquant l'ensemble étendu d'informations de positionnement, l'information de demande de position spécifique indiquant notamment différents types d'ensembles étendus d'informations de positionnement, les différents types d'ensembles étendus d'informations de positionnement se rapportant notamment à :
- différents types ou systèmes de systèmes mondiaux de navigation par satellite,
- différentes tailles de contenu.

3. Procédé selon l'une des revendications précédentes, l'ensemble étendu d'informations de positionnement comprenant au moins l'un des éléments suivants :
- les informations de positionnement calculées, calculées par l'équipement utilisateur (20),
- les données satellite associées, notamment en fonction du type ou du système de système mondial de navigation par satellite utilisé,
- des informations relatives au nombre et/ou aux identifiants des satellites utilisés, notamment les paramètres de satellites, les paramètres orbitaux, les mesures de temps et/ou les horodatages,
- des données et mesures pour des satellites spécifiques d'un système mondial de navigation par satellite, notamment les identifiants de satellite, et notamment sur la base d'informations de positionnement préalablement stockées pour l'équipement utilisateur (20).

4. Procédé selon l'une des revendications précédentes, le réseau central (120) comprenant un système de vérification de la localisation par satellite, l'ensemble étendu d'informations de positionnement étant transmis au système de vérification de la localisation par satellite, le système de vérification de la localisation par satellite récupérant notamment l'ensemble étendu d'informations de positionnement fourni par l'équipement utilisateur (20), le système de vérification de la localisation par satellite stockant notamment l'ensemble étendu d'informations de positionnement reçu de l'équipement utilisateur (20) dans une base de données propre au système de vérification de la localisation par satellite.

5. Procédé selon l'une des revendications précédentes, dans lequel, lors d'une troisième étape, une validation basée sur le réseau des informations de positionnement relatives à l'équipement utilisateur (20) est effectuée, notamment par le système de vérification de la localisation par satellite du réseau central (120).

6. Procédé selon l'une des revendications précédentes, l'information de demande de position spécifique étant reçue par l'équipement utilisateur (20) via ou à l'aide d'une signalisation 3GPP, notamment une signalisation de la strate de non-accès (NAS), et/ou à l'aide d'un protocole de plan utilisateur,
l'ensemble étendu d'informations de positionnement étant notamment transmis par l'équipement utilisateur (20) via ou à l'aide d'une signalisation 3GPP, notamment une signalisation de la strate de non-accès (NAS), et/ou à l'aide d'un protocole de plan utilisateur.

7. Équipement utilisateur (20) destiné à être utilisé avec un réseau de communication mobile (100) en vue d'une validité et/ou d'une vérifiabilité accrue d'informations de positionnement relatives à l'équipement utilisateur (20),
l'équipement utilisateur (20) étant desservi via une entité/fonctionnalité d'antenne (111) fournissant une couverture radio à l'équipement utilisateur (20) et comprenant ou étant associée à une entité de station de base faisant partie d'un réseau non terrestre ou d'une partie de réseau non terrestre du réseau de communication mobile (100),
les informations de positionnement relatives à l'équipement utilisateur (20) étant générées à l'aide d'un système mondial de navigation par satellite, l'équipement utilisateur (20) comprenant une entité/fonctionnalité de récepteur GNSS afin de pouvoir générer des informations de positionnement relatives à l'équipement utilisateur (20), l'équipement utilisateur (20) étant configuré, afin d'accroître la validité et/ou la vérifiabilité des informations de positionnement relatives à l'équipement utilisateur (20), de telle sorte que :
- l'équipement utilisateur (20) reçoit, de l'entité de station de base (111) ou du réseau central (120), une information de demande de position spécifique déclenchant l'équipement utilisateur (20) afin qu'il fournisse un ensemble étendu d'informations de positionnement,
- l'équipement utilisateur (20) transmet - à l'entité de station de base (111) ou au réseau central (120) et en réponse à l'information de demande de position spécifique - un ensemble étendu d'informations de positionnement comprenant ses informations de positionnement calculées ainsi que des données brutes reçues de plusieurs satellites du système mondial de navigation par satellite,
- une validation basée sur le réseau des informations de positionnement relatives à l'équipement utilisateur (20) est effectuée, un système de vérification de la localisation par satellite étant configuré pour appliquer une approche par étapes comprenant une vérification de base de l'exactitude du calcul, une vérification de la corrélation des données satellite du système d'accès 3GPP avec le système mondial de navigation par satellite utilisé, une vérification permettant de déterminer si les informations basées sur le réseau terrestre disponibles doivent être corrélées pour valider les informations de positionnement obtenues à l'aide du système mondial de navigation par satellite, une vérification à l'aide de la simulation GNSS portant sur la plausibilité de l'ensemble étendu d'informations de positionnement, ainsi qu'une vérification fondée sur l'intelligence artificielle ou la vérification statistique.

8. Réseau de communication mobile (100) comprenant un équipement utilisateur (20) utilisé avec le réseau de communication mobile (100) en vue d'une validité et/ou d'une vérifiabilité accrue d'informations de positionnement relatives à l'équipement utilisateur (20), le réseau de communication mobile (100) comprenant un réseau central (120) et un réseau d'accès radio (110), le réseau d'accès radio (110) correspondant à un réseau non terrestre ou comprenant au moins une partie correspondant à un réseau non terrestre, l'équipement utilisateur (20) étant desservi par une entité de station de base faisant partie de ce réseau non terrestre ou de cette partie de réseau non terrestre, l'entité de station de base disposant
- en vue de desservir l'équipement utilisateur (20) ou de lui fournir une couverture radio - d'au moins une entité/fonctionnalité d'antenne (111) étant soit une entité/fonctionnalité d'antenne satellitaire, soit une entité/fonctionnalité d'antenne basée sur une plateforme à haute altitude, l'entité/fonctionnalité d'antenne (111) fournissant une couverture radio à une cellule radio (11),
l'équipement utilisateur (20) étant configuré pour générer les informations de positionnement à l'aide d'un système mondial de navigation par satellite, l'équipement utilisateur (20) étant configuré pour comprendre une entité/fonctionnalité de récepteur GNSS afin de pouvoir générer des informations de positionnement relatives à l'équipement utilisateur (20),
le système ou le réseau de communication mobile (100) étant configuré, afin d'accroître la validité et/ou la vérifiabilité des informations de positionnement relatives à l'équipement utilisateur (20), de telle sorte que :
- l'équipement utilisateur (20) est configuré pour recevoir, de l'entité de station de base (111) ou du réseau central (120), une information de demande de position spécifique déclenchant l'équipement utilisateur (20) afin qu'il fournisse un ensemble étendu d'informations de positionnement,
- l'équipement utilisateur (20) est configuré pour transmettre - à l'entité de station de base (111) ou au réseau central (120) et en réponse à l'information de demande de position spécifique - un ensemble étendu d'informations de positionnement comprenant ses informations de positionnement calculées ainsi que des données brutes reçues de plusieurs satellites du système mondial de navigation par satellite,
- une validation basée sur le réseau des informations de positionnement relatives à l'équipement utilisateur (20) est effectuée, un système de vérification de la localisation par satellite appliquant une approche par étapes comprenant une vérification de base de l'exactitude du calcul, une vérification de la corrélation des données satellite du système d'accès 3GPP avec le système mondial de navigation par satellite utilisé, une vérification permettant de déterminer si les informations basées sur le réseau terrestre disponibles doivent être corrélées pour valider les informations de positionnement obtenues à l'aide du système mondial de navigation par satellite, une vérification à l'aide de la simulation GNSS portant sur la plausibilité de l'ensemble étendu d'informations de positionnement, ainsi qu'une vérification fondée sur l'intelligence artificielle ou la vérification statistique.

9. Programme comprenant un code de programme lisible par ordinateur qui, lorsqu'il est exécuté en partie sur un équipement utilisateur (20) et en partie sur un nœud de réseau d'un réseau de communication mobile (100), amène l'équipement utilisateur (20) et le nœud de réseau du réseau de communication mobile (100) à exécuter un procédé selon l'une des revendications 1 à 6.

10. Support lisible par ordinateur comprenant des instructions qui, lorsqu'elles sont exécutées en partie sur un équipement utilisateur (20) et en partie sur un nœud de réseau d'un réseau de communication mobile (100), amènent l'équipement utilisateur (20) et le nœud de réseau du réseau de communication mobile (100) à exécuter un procédé selon l'une des revendications 1 à 6.
